# EUROPEAN PATENT SPECIFICATION

(11) **EP 2 428 440 B1**
(45) Date of publication and mention of the grant of the patent: **13.11.2013**
(21) Application number: 10176082.5
(22) Date of filing: 09.09.2010
(51) Int. Cl.: B62M 3/08

(54) **Pedal device for bicycle**
Pedalvorrichtung für ein Fahrrad
Dispositif à pédales pour bicyclette

(43) Date of publication of application: 14.03.2012
(73) Proprietor: Lin, Chang Hui, Province of China (TW)
(72) Inventor: Lin, Chang Hui, Province of China (TW)
(74) Representative: Beck, Michael Rudolf

(56) References cited:
- EP-A1- 0 531 873
- EP-A1- 0 572 291
- DE-A1- 3 724 578
- US-A- 5 419 218
- US-A1- 2002 170 382
- US-A1- 2003 066 384
- US-A1- 2007 137 429

## Description

The invention relates to a pedal device according to claim 1.

Typical bicycle pedal devices for bicycles comprise a cleat attached to a bicycle shoe for detachably attaching to a bicycle pedal. However, when the bicycle shoe is rotated relative to the pedal, the user may not know whether the cleat of the bicycle shoe has been disengaged from the bicycle pedal or not.

US 5,419,218 A disclosed a pedal device of the type defined in the preamble portion of claim 1. A rear bracket is used for securing the cleat. Adjustment of the reaction force of the bracket is obtained by changing the abutment position of a terminal arm of the bracket.

DE 37 24 578 A discloses a pedeal device wherein a rod for engagement with a recess at a rear end of the cleat is supported against pins which are selectively insereted into a plurality of holes provided on the pedal. Adjustment of the reaction force requires changing the position of the pins in the holes.

The invention is to provide an alternative pedal device allowing for for engaging and disengaging a cleat and a bicycle pedal.
FIG. 1 is a perspective view of a pedal device for a bicycle;
FIG. 2 is a partial exploded view of the pedal device;
FIGS. 3, 4 are partial cross sectional views of the pedal device;
FIGS. 5, 6 are side plan views of the pedal device; and
FIGS. 7, 8 are partial cross sectional views of the pedal device.

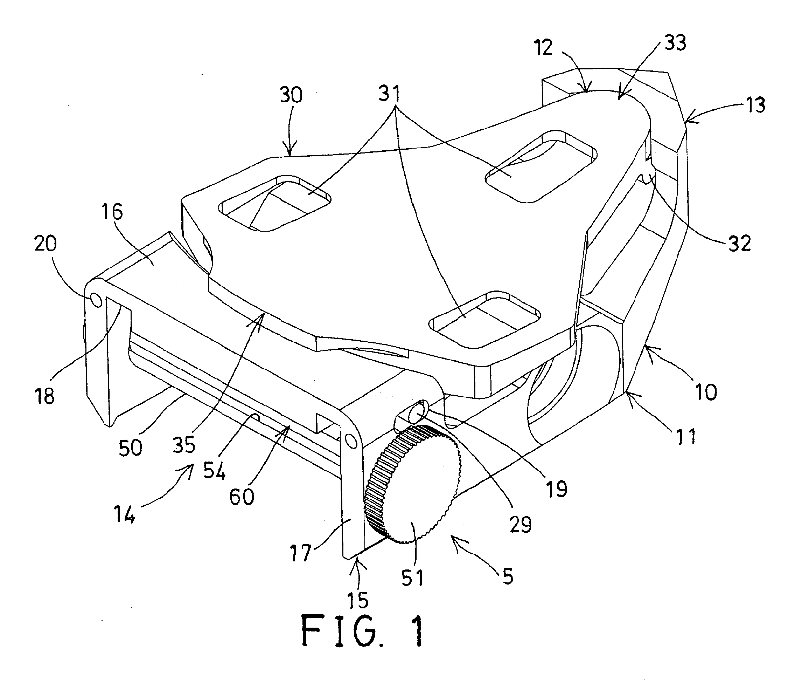

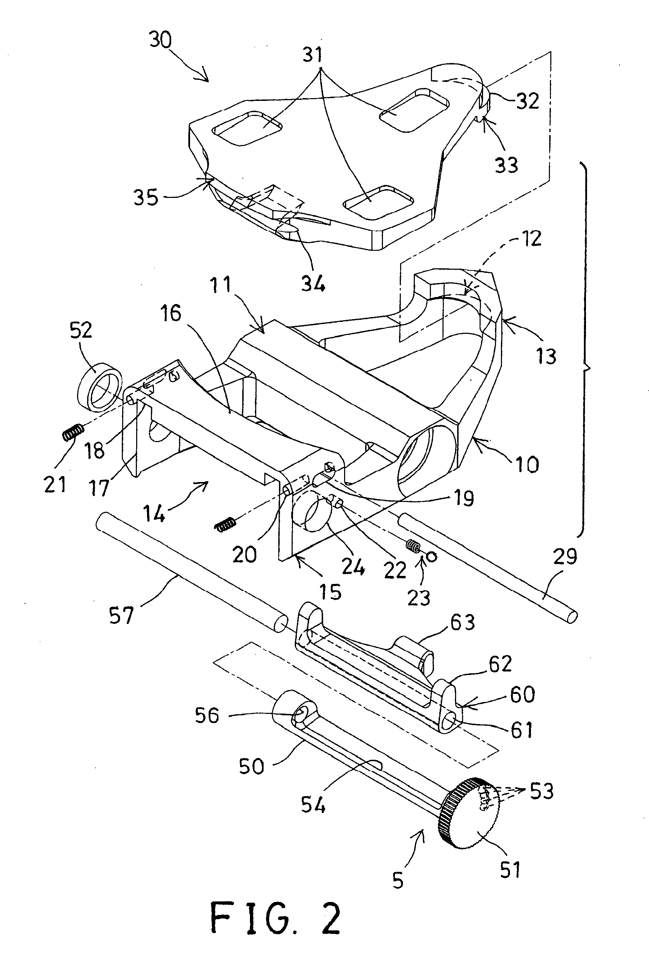

Referring to FIGS. 1-4, a pedal device for a bicycle comprises a pedal 10 including a middle portion 11 for attaching to a shaft of a bicycle, a stop 12 formed in the front portion 13, a chamber 14 formed in the rear portion 15 and defined by an upper wall 16 and two side walls 17, one or more (such as two) passages 18 formed in the bottom of the upper wall 16 and communicative with the chamber 14 of the pedal 10, and one or more (such as two) channels 19 formed in the side walls 17 for engaging with a rod 29. The pedal 10 includes a groove 20 formed in each of the side walls 17 and communicative with the channels 19 for engaging with a spring 21 which is engaged with the rod 29 for forcing the rod 29 away from the front portion 13 of the pedal 10, a hole 22 formed in one of the side walls 17 for engaging with a spring-biased projection 23, and an orifice 24 formed in each of the side walls 17 and communicative with the chamber 14 of the pedal 10 for engaging with a shaft 50 of an adjusting device 5.

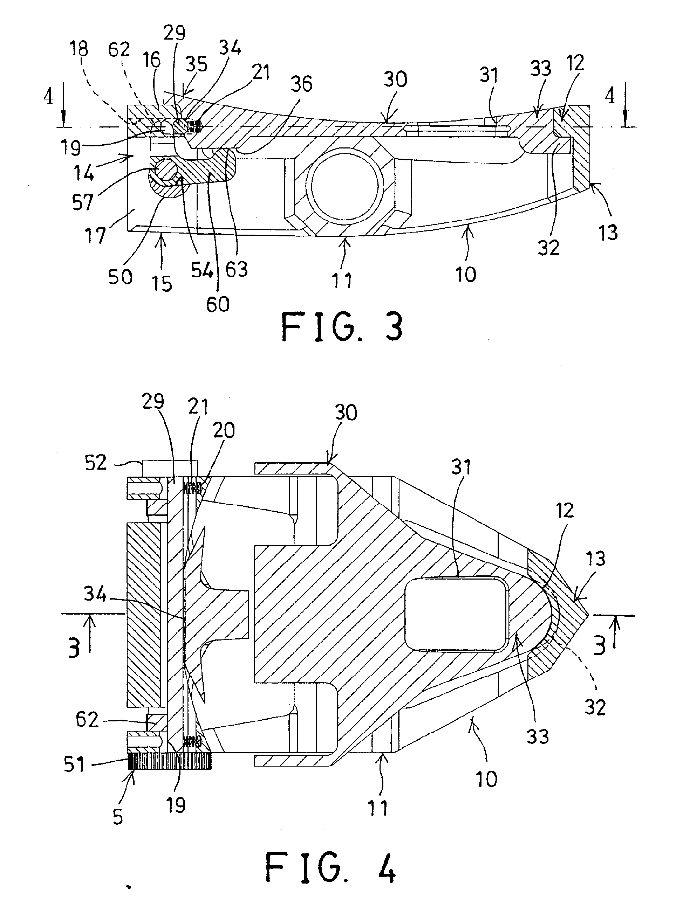

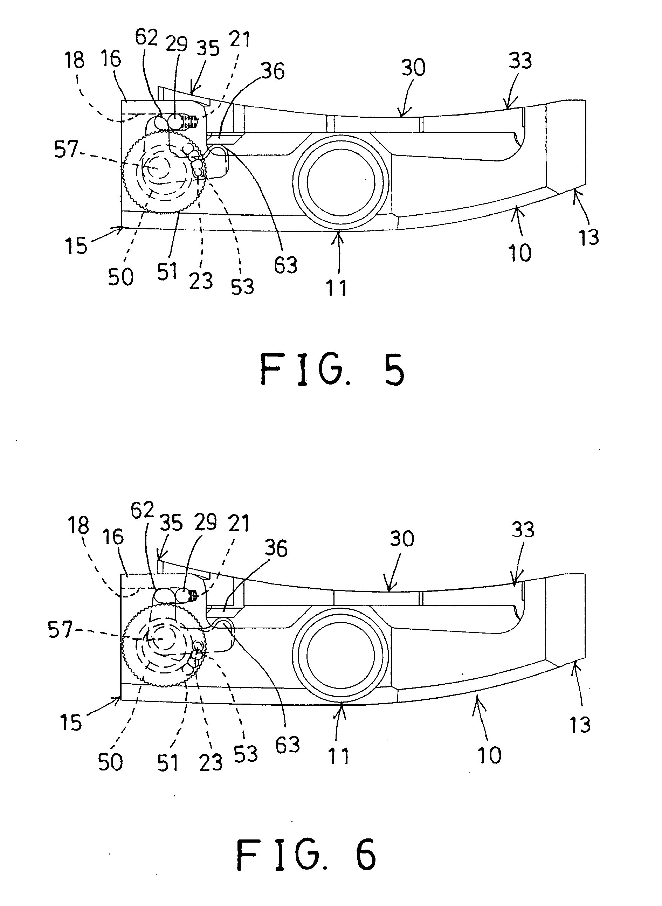

A cleat 30 includes one or more openings 31 for attaching to a bicycle shoe and for detachably coupling to the pedal 10, an ear 32 formed in the front portion 33 for engaging with the stop 12, a recess 34 formed in the rear portion 35 for engaging with the rod 29 (FIGS. 3-4, 7-8) which may be biased to engage with the cleat 30 and to anchor the cleat 30 to the pedal 10, and a seat 36 formed in the bottom of the rear portion 35 of the cleat 30. The shaft 50 is engaged in the orifice 24 of the side walls 17 and extended through the chamber 14, and includes an enlarged knob 51 formed on one end of the shaft 50, a retaining ring 52 attached to the other end of the shaft 50 for attaching the shaft 50 to the pedal 10, and one or more cavities 53 for engaging with the projection 23 (FIGS. 5, 6) which may anchor the shaft 50 to the pedal 10 at selected angular positions.

The adjusting device 5 includes a depression 54 formed in the shaft 50, an eccentric aperture 56 formed in the shaft 50 and communicative with the depression 54 for engaging with a pole 57, an actuator 60 having a bore 61 for engaging with the pole 57 and for eccentrically attaching to the shaft 50, and having one or more (such as two) fingers 62 engaged in the passages 18 of the pedal 10 and engaged with the rod 29, and having a leg 63 for engaging with the seat 36 (FIGS. 3, 5-7) and for actuating the rear portion 35 of the cleat 30 upwardly away from the rear portion 15 of the pedal 10.

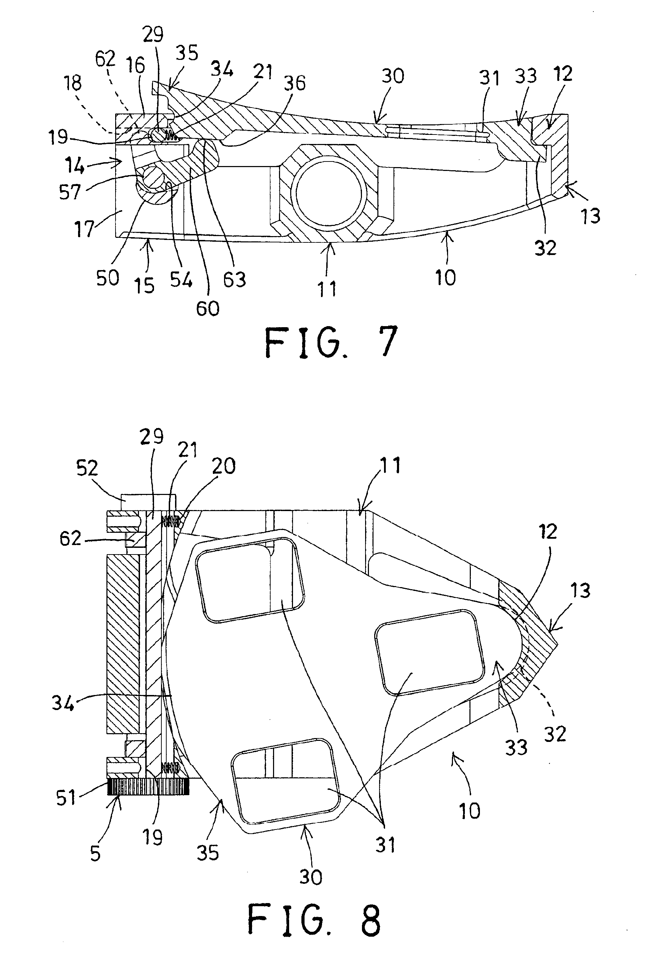

In operation, as shown in FIG. 7, the ear 32 at the front portion 33 of the cleat 30 may first be engaged with the stop 12, and the rear portion 35 of the cleat 30 may then be depressed downwardly until the rod 29 is engaged into the recess 34 of the cleat 30 (FIGS. 3, 4) and to anchor the cleat 30 to the pedal 10. The knob 51 of the shaft 50 may be rotated relative to the pedal 10 to engage the projection 23 with either of the cavities 53 of the knob 51 and to anchor the shaft 50 to the pedal 10 at the selected angular positions, and may actuate the fingers 62 to move the rod 29 onto the spring 21 and to adjust the engagement of the rod 29 onto the cleat 30.

When it is required to disengage the cleat 30 from the pedal 10, it is only required to rotate the cleat 30, or to move the rear portion 35 of the cleat 30 sidewise (FIG. 8), and to disengage the rod 29 from the recess 34 of the cleat 30, and to allow the cleat 30 to be disengaged from the pedal 10, at this moment, the rod 29 may rotate the actuator 60 and may force the leg 63 of the actuator 60 to engage with the seat 36 of the cleat 30 and to move the rear portion 35 of the cleat 30 upwardly away from the rear portion 15 of the pedal 10.

## Claims

1. A pedal device for a bicycle comprising:
a pedal (10) including a middle portion (11) for attaching to a shaft of a bicycle, and a stop (12) formed in a front portion (13) of the pedal (10),
a cleat (30) including an ear (32) formed in a front portion (33) of the cleat for engaging with the stop (12),
and a recess (34) formed in a rear portion (35) of the cleat,
wherin a rod (29) is attached to the pedal (10) for engaging with the recess (34) of the cleat (30),
wherein the pedal (10) includes an adjusting device (5) for adjusting an engagement of the rod (29) onto the cleat (30),
**characterized in that**
a spring (21) is engaged with the rod (29) for forcing the rod (29) away from the front portion (13) of the pedal (10), and
the adjusting device (5) includes a shaft (50) engaged in the pedal (10), and an actuator (60) attached to the shaft (50) and having at least one finger (62) for engaging with the rod (29) to move the rod (29) onto the spring (21) to thereby adjust the engagement of the rod onto the cleat (30).

2. A pedal device for a bicycle as claimed in claim 1, wherein the shaft (50) includes an eccentric aperture (56), and the actuator (60) is attached to the eccentric aperture (56) with a pole (57).

3. A pedal device for a bicycle as claimed in claim 1 or 2, wherein the actuator (60) includes a leg (63) for engaging with the cleat (30) and for actuating the rear portion (35) of the cleat (30) upwardly away from a rear portion (15) of the pedal (10).

4. A pedal device for a bicycle as claimed in claim 3, wherein the cleat (30) includes a seat (36) formed in the rear portion (35) of the cleat (30) for engaging with the leg (63) of the actuator (60).

5. A pedal device for a bicycle as claimed in one of claims 1 to 4, wherein the pedal (10) includes a chamber (14) formed in the rear portion (15) and defined by an upper wall (16) and two side walls (17), and includes at least one passage (18) formed in the upper wall (16) and communicative with the chamber (14) of the pedal (10) for engaging with the finger (62).

6. A pedal device for a bicycle as claimed in one of claims 1 to 5, wherein the shaft (50) includes a knob (51) having a number of cavities (53), and a spring-biased projection (23) is engaged in the pedal (10) for engaging with either of the cavities (53) of the shaft (50).

## Patentansprüche

1. Pedalvorrichtung für ein Fahrrad, umfassend:
ein Pedal (10) mit einem mittleren Abschnitt (11) zur Befestigung an einer Welle eines Fahrrads und einem Anschlag (12), der in einem vorderen Abschnitt (13) des Pedals (10) ausgebildet ist,
eine Schuhplatte (30) mit einem Ohr (32), das zum Eingriff mit dem Anschlag (12) in einem vorderen Abschnitt (33) der Schuhplatte ausgebildet ist,
und eine Aussparung (34), die in einem hinteren Abschnitt (35) der Schuhplatte ausgebildet ist,
wobei eine Stange (29) zum Eingriff mit der Aussparung (34) der Schuhplatte (30) an dem Pedal (10) befestigt ist,
wobei ein Pedal (10) eine Einstellvorrichtung (5) zum Einstellen des Eingriffs der Stange (29) mit der Schuhplatte (30) aufweist,
**dadurch gekennzeichnet, dass**
eine Feder (21) mit der Stange (29) in Eingriff steht, um die Stange (29) von dem vorderen Abschnitt (13) des Pedals (10) weg zu drücken, und
die Einstellvorrichtung (5) eine Welle (50) aufweist, die mit dem Pedal (10) in Eingriff steht, und ein Betätigungselement (60) an der Welle (50) befestigt ist und mindestens einen Finger (62) zum Eingriff mit der Stange (29) aufweist, um die Stange (29) auf die Feder (21) zu bewegen und dadurch den Eingriff der Stange an der Schuhplatte (30) einzustellen.

2. Pedalvorrichtung für ein Fahrrad nach Anspruch 1, wobei die Welle (50) eine exzentrische Öffnung (56) aufweist und das Betätigungselement (60) mit einem Stab (57) an der exzentrischen Öffnung (56) befestigt ist.

3. Pedalvorrichtung für ein Fahrrad nach Anspruch 1 oder 2, wobei das Betätigungselement einen Schenkel (63) zum Eingriff mit der Schuhplatte (30) und zum Betätigen des hinteren Abschnitts (35) der Schuhplatte (30) von einem hinteren Abschnitt (15) des Pedals (10) weg nach oben aufweist.

4. Pedalvorrichtung für ein Fahrrad nach Anspruch 3, wobei die Schuhplatte (30) einen Sitz (36) aufweist, der in dem hinteren Abschnitt (35) der Schuhplatte (30) ausgebildet ist, zum Eingriff mit dem Schenkel (63) des Betätigungselements (60).

5. Pedalvorrichtung für ein Fahrrad nach einem der Ansprüche 1 bis 4, wobei das Pedal (10) eine Kammer (14) aufweist, die in dem hinteren Abschnitt (15) ausgebildet ist und von einer oberen Wand (16) und zwei Seitenwänden (17) definiert wird, und mindestens einen Durchgang (18) zum Eingriff mit dem Finger (62) aufweist, der in der oberen Wand (16) ausgebildet ist und mit der Kammer (14) des Pedals (10) in Verbindung steht.

6. Pedalvorrichtung für ein Fahrrad nach einem der Ansprüche 1 bis 5, wobei die Welle (50) eine Rändelschraube (51) mit mehreren Hohlräumen (53) aufweist, und ein federbelasteter Vorsprung (23) zum Eingriff mit einem der Hohlräume (53) der Welle (50) mit dem Pedal (10) in Eingriff steht.

## Revendications

1. Dispositif de pédale pour bicyclette comprenant :
une pédale (10) comprenant une portion centrale (11) pour fixation à un arbre de bicyclette et une butée (12) formée dans une portion frontale (13) de la pédale (10),
un taquet (30) comprenant une oreille (32) formée dans une portion frontale (33) du taquet pour être en prise avec la butée (12)
et un évidement (34) formé dans une portion arrière (35) du taquet,
dans lequel une tige (29) est fixée à la pédale (10) pour être en prise avec l'évidement (34) du taquet (30),
dans lequel la pédale (10) comprend un dispositif d'ajustage (5) pour ajuster une prise de la tige (29) sur le taquet (30),
**caractérisé en ce**
**qu'**un ressort (21) est en prise avec la tige (29) pour forcer la tige (29) à quitter la portion frontale (13) de la pédale (10) et
le dispositif d'ajustage (5) comprend un arbre (50) en prise dans la pédale (10) et un actionneur (60) fixé à l'arbre (50) et ayant au moins un doigt (62) pour être en prise avec la tige (29) pour déplacer la tige (29) sur le ressort (21) en ajustant ainsi la prise de la tige sur le taquet (30).

2. Dispositif de pédale pour bicyclette selon la revendication 1 dans lequel l'arbre (50) comprend une ouverture excentrique (56) et l'actionneur (56) est fixé à l'ouverture excentrique (56) avec un pôle (57).

3. Dispositif de pédale pour bicyclette selon la revendication 1 ou 2 dans lequel l'actionneur (60) comprend un montant (63) pour être en prise avec le taquet (30) et pour actionner la portion arrière (35) du taquet (30) vers le haut en s'éloignant d'une portion arrière (15) de la pédale (10).

4. Dispositif de pédale pour bicyclette selon la revendication 3 dans lequel le taquet (30) comprend un siège (36) formé dans la portion arrière (35) du taquet (30) pour être en prise avec le montant (63) de l'actionneur (60).

5. Dispositif de pédale pour bicyclette selon l'une des revendications 1 à 4 dans lequel la pédale (10) comprend une chambre (14) formée dans la portion arrière (15) et définie par une paroi supérieure (16) et deux parois latérales (17) et comprend au moins un passage (18) formé dans la paroi supérieure (16) et communique avec la chambre (14) de la pédale (10) pour être en prise avec le doigt (62).

6. Dispositif de pédale pour bicyclette selon l'une des revendications 1 à 5 dans lequel l'arbre (50) comprend un bouton (51) ayant un nombre de cavités (53) et une saillie chargée par ressort (23) est en prise dans la pédale (10) pour être en prise avec l'une ou l'autre des cavités (53) de l'arbre (50).
